# EUROPÄISCHE PATENTSCHRIFT

(11) **EP 1 338 077 B1**
(45) Veröffentlichungstag und Bekanntmachung des Hinweises auf die Patenterteilung: **23.03.2005**
(21) Anmeldenummer: 01994732.4
(22) Anmeldetag: 27.11.2001
(51) Int. Cl.: H02K 49/04, B60L 7/28, H02K 9/19, B61H 7/08

(54) **RETARDER, INSBESONDERE ALS BREMS- ODER ZUSATZBREMSEINRICHTUNG FÜR FAHRZEUGE ODER DERGLEICHEN, INSBESONDERE SCHIENENFAHRZEUGE**
RETARDER, PARTICULARLY PROVIDED AS A BRAKING DEVICE OR AUXILIARY BRAKING DEVICE FOR VEHICLES OR THE LIKE, ESPECIALLY RAIL VEHICLES
RALENTISSEUR, S'UTILISANT NOTAMMENT COMME DISPOSITIF DE FREINAGE OU DE FREINAGE AUXILIAIRE POUR VEHICULES OU SIMILAIRES, EN PARTICULIER VEHICULES FERROVIAIRES

(30) Priorität: 27.11.2000 DE 10058801; 19.01.2001 DE 10102548; 23.03.2001 DE 10114183
(43) Veröffentlichungstag der Anmeldung: 27.08.2003
(73) Patentinhaber: Kloft, Lothar, 65551 Limburg-Lindenholzhausen (DE); Carballo Rodriguez, Pablo, 28850 Torrejon de Ardoz (Madrid) (ES); VISAPA, S.L.U., 03003 Alicante (ES)
(72) Erfinder: Kloft, Lothar, 65551 Limburg-Lindenholzhausen (DE); Carballo Rodriguez, Pablo, 28850 Torrejon de Ardoz (Madrid) (ES)
(74) Vertreter: Müller, Eckhard, Dr.
(86) Internationale Anmeldenummer: PCT/EP2001/013783
(87) Internationale Veröffentlichungsnummer: WO 2002/043229

(56) Entgegenhaltungen:
- DE-B- 1 102 901
- DE-C- 661 026
- GB-A- 575 822
- US-A- 2 487 551
- PATENT ABSTRACTS OF JAPAN vol. 010, no. 008 (E-373), 14. Januar 1986 (1986-01-14) & JP 60 170458 A (MITSUBISHI DENKI KK), 3. September 1985 (1985-09-03)

## Beschreibung

Die Erfindung bezieht sich auf einen Retarder als Brems- oder Zusatzbremseinrichtung für Fahrzeuge oder dergleichen, insbesondere Schienenfahrzeuge, gemäß dem Oberbegriff des Anspruches 1.

Unter einem "Retarder" soll im folgenden eine elektrische Wirbelstrombremse verstanden werden, die die Betriebsbremse, von bspw. Schienen-, Nutzfahrzeugen o. dgl. in bestimmten Situationen unterstützen oder ersetzen soll. Die Bremswirkung eines Retarders entsteht durch Aufbau eines magnetischen Feldes, das der Drehung eines Rotors aufgrund der Induktion von Wirbelströmen in dem Rotor entgegenwirkt. Der Rotor ist dabei drehfest bspw. mit der Kardanwelle des Fahrzeugs verbunden. Das Magnetfeld kann bspw. durch vier Magnetspulen oder auch Magnetspulenpaare erzeugt werden, die je nach individuell benötigter Bremsleistung nacheinander zugeschaltet werden können. Ein derartiger Retarder ist im einzelnen bspw. in der DE 39 08 234 A1 beschrieben.

Ein Retarder als Bremseinrichtung mit den Merkmalen des Oberbegriffs des Anspruches 1 ist bereits aus der DE 11 02 901 B bekannt mit einem Stator bestehend aus zwei axial beabstandeten Statorhälften, die jeweils Magnetfeldspulen aufweisen, und einem Rotor, der zwischen den zwei Statorhälften angeordnet ist, wobei der Rotor drehfest mit einer Welle und der Stator mit einem Gestell gekoppelt ist.

Der Rotor ist aus zwei benachbarten Rotorhälften gebildet. Diese zwei Rotorhälften sind an ihren radial inneren Enden in Kontakt miteinander. In einem radial äußeren Ringabschnitt, der im wesentlichen den Magnetfeldspulen des Stators benachbart ist, sind die zwei Rotorhälften mit nach innen gerichteten, in der Drehrichtung gegeneinander versetzten, radialen Rippen versehen. Die Rippen verjüngen sich nach ihren radial inneren Enden zu, so dass eine radial innere, ringförmige Kammer gebildet wird, mit welcher Öffnungen in den Rotorhälften in Verbindung stehen, die zur Zirkulation von Kühlluft dienen.

Aus der JP 61266064 ist bereits bekannt, eine Wirbelstrombremse bei einem Schienenfahrzeug einzusetzen, wobei der Rotor drehfest mit der Radachse verbunden ist und der Stator aus zu beiden Seiten des Rotors angeordneten Spulen besteht. Die bekannte Vorrichtung weist jedoch nur eine geringe Bremswirkung auf, was u. a. darauf zurückzuführen ist, daß die Spulen nur über etwa einen Halbkreis des Rotors verteilt angeordnet sind.

Davon ausgehend liegt der Erfindung die Aufgabe zugrunde, einen Retarder mit den Merkmalen des Oberbegriffs des Anspruches 1 anzugeben, welcher sich durch eine hohe Bremswirkung, kompakte Bauweise und hohe Laufleistung auszeichnet. Zudem soll der erfindungsgemäße Retarder insbesondere für Schienenfahrzeuge geeignet sein.

Diese Aufgabe wird nach der Erfindung durch einen Retarder mit den Merkmalen des Anspruches 1 gelöst. Vorteilhafte Ausgestaltungen sind Gegenstand der Unteransprüche 2 bis 15.

Durch die Erfindung wird ein Retarder mit einer hohen Bremswirkung, kompakter Bauweise und hoher Laufleistung zur Verfügung gestellt, der insbesondere für Schienenfahrzeuge geeignet ist. Durch den besonderen Aufbau des Rotors als zweigeteilte Rotorscheibe, wobei die äußeren Ringabschnitte mit lichtem axialem Abstand zueinander angeordnet sind, wird gewährleistet, daß der Rotor den aufgrund der Wärmeentwicklung während der Aktivierung des Retarders entstehenden thermischen Beanspruchung standhalten kann. Durch diese Maßnahme der axialen Beabstandung der äußeren Ringabschnitte der beiden Rotorhälften ist die Möglichkeit gegeben, daß eine Relativbewegung dieser Rotorhälften zueinander möglich ist, die aufgrund unterschiedlicher thermischer Wärmeausdehnung insbesondere bei großen Bremsleistungen auftritt. Darüber hinaus kann der Rotor im Bereich des zwischen den Rotorhälften befindlichen lichten Abstandes eine zusätzliche Kühlung erfahren. Durch die Erfindung ist gewährleistet, daß die Rotorhälften des Rotors eine gewisse Flexibilität in axialer Richtung besitzen, so daß Schwerkräften oder dergleichen, die aufgrund der thermischen Beanspruchung auftreten können, Rechnung getragen ist.

Nach einer vorteilhaften Weiterbildung der Erfindung ist an einer äußeren Seite des im wesentlichen ringförmigen Stators beziehungsweise der jeweiligen äußeren Statorhälfte jeweils eine weitere äußere, bevorzugt einteilige Rotorscheibe angeordnet, die mit der Achse oder Welle ebenfalls drehfest verbunden ist. Insoweit werden die seitlich nach außen gerichteten Magnetfelder des Stators beziehungsweise der benachbarten Statorhälften ebenfalls zur Erzeugung eines Bremsmomentes ausgenutzt, da in diesen äußeren Bereichen des Stators beziehungsweise der Statorhälften weitere Rotorscheiben, die bevorzugt einteilig ausgebildet sind, positioniert sind. Insgesamt wird hierdurch das Bremsmoment des erfindungsgemäßen Retarders weiter erhöht, ohne wesentlich die Bauform zu vergrößern.

Nach einem anderen Aspekt sind dem Stator beziehungsweise den beiden Statorhälften ein weiterer Statorabschnitt, der in Form und Aufbau vergleichbar zu den Statorhälften ist, axial beabstandet zugeordnet, so daß in einem durch eine Statorhälfte und den weiteren Statorabschnitt gebildeten Spalt eine zweite zweigeteilte und drehfest mit der Achse oder Welle verbundene Rotorscheibe angeordnet werden kann. Nach dieser Ausführungsform sind also mittlere, zweigeteilte Rotorscheiben vorgesehen, die im Inneren eines dreigeteilten Stators angeordnet sind. Zusätzlich besteht auch die Möglichkeit, zwei weitere, äußere Rotorscheiben an der Außenseite der beiden äußeren Statorabschnitt des dreigeteilten Stators vorzusehen. Insgesamt kann hierdurch das Bremsmoment des Retarders erheblich erhöht werden, wobei sich die Baugröße nur unwesentlich erhöht.

Zur mechanischen Stabilisierung der beiden Rotorhälften der wenigstens zweigeteilten Rotorscheibe im Bereich der radial äußeren, einander zugewandten Ringabschnitte bietet es sich nach einer vorteilhaften Ausgestaltung der Erfindung an, eine Verzahnungsgeometrie, insbesondere eine korrespondierende und teilweise ineinander eingreifende Verzahnung und Gegenverzahnung an den beiden Rotorhälften vorzusehen, die bevorzugt eine Kreisringstruktur besitzen. Aufgrund dieser Maßnahme wird die mechanische Stabilität des zweigeteilten Rotors erheblich erhöht, wobei zusätzlich die Oberfläche zwischen den beiden Rotorhälften aufgrund der vorgesehenen Verzahnungsstruktur vergrößert wird.

Weiterhin bietet es sich von besonderem Vorteil an, daß der Rotor, insbesondere die Rotorscheiben beziehungsweise die Rotorhälften und/oder auch der Stator, insbesondere die Statorhälften beziehungsweise der weitere Statorabschnitt durch in radialer Richtung geteilte Bauteile gebildet sind, die nach dem Einbau mittels Verbindungsmittel fest miteinander verbunden sind. Aufgrund dieser Maßnahme kann der Retarder beispielsweise an der Achse eines Schienenfahrzeuges angebaut werden, ohne daß die Radsätze hierzu abgenommen werden müssten.

Von Vorteil ist der Stator, insbesondere sind die Statorhälften beziehungsweise der Statorabschnitt, über verstellbare Halterungen mit dem Fahrzeug oder dergleichen oder beispielsweise dessen Fahrgestell verbunden.

Auch empfiehlt es sich, daß der Stator über ein- oder nachstellbare Spannelemente mit einer Radaufhängung verbunden beziehungsweise an dieser fixiert ist. Diese Maßnahme erweist sich insbesondere in Verbindung mit dem Einsatz des Retarders bei Schienenfahrzeugen insoweit als vorteilhaft, als die Achsen beispielsweise bei Güterzügen sich um einige Dezimeter in axialer Richtung relativ zu dem Fahrgestell beziehungsweise dem Wagon verschieben können. Aufgrund dieser Maßnahme ist daher keine Anordnung vorzusehen, mit der der Stator derartigen Relativverschiebungen folgen kann. Vielmehr ist der Stator aufgrund der Anbindung an die Radaufhängung den gleichen Verschiebungen wie der Rotor unterworfen. Insbesondere bei einem Eisenbahnwagon bietet es sich an, daß dem Retarder eine eigene Stromversorgung zur Versorgung der Magnetfeldspulen und ggf. der Elektroniksteuerung des Retarders zugeordnet sind, die bevorzugt durch einen Generator, ggf. mit nachgeschalteten Akkumulator gebildet ist, da diese Wagons in der Regel keine eigene Stromversorgung besitzen. Dabei kann der Generator beispielsweise über die Achse oder Welle angetrieben werden.

Insbesondere dann, wenn der Retarder in einer Lokomotive zum Einsatz kommt, bietet es sich an, daß zwischen der Achse beziehungsweise Welle und dem Retarder ein Zwischengetriebe angeordnet ist. In solchen Lokomotiven ist ein Generator für die Stromversorgung ohnehin vorhanden, so daß dieser nicht gesondert bereitgestellt werden muß.

Nach einer anderen vorteilhaften Ausgestaltung der Erfindung ist der Retarder in einem Gehäuse, bevorzugt bestehend aus Aluminium oder dergleichen, gekapselt, wobei die Rotorscheiben von einem Flüssigkeitsbad, insbesondere von einer Kühlflüssigkeit beaufschlagt sind. Aufgrund dieser Maßnahme kann die beim Bremsvorgang auftretende Wärmebelastung des Retarders minimiert werden, da mittels der Kühlflüssigkeit eine besondere Kühlung der Rotorscheiben ermöglicht ist.

Dabei wird nach einer anderen vorteilhaften Ausgestaltung der Erfindung die Kühlflüssigkeit mittels einer Pumpe, zum Beispiel einer Elektropumpe, in einem geschlossenen Kreislauf zwischen dem Gehäuse und einem Wärmetauscher umgewandelt, über den die Wärmeenergie sicher und rasch dem Retarder entzogen werden kann.

Nach einer konstruktiven Ausgestaltung der Erfindung erweist es sich als vorteilhaft, daß die Rotorscheiben mittels Spannelementen an der Achse oder Welle befestigt sind, wobei innere und äußere Ringelemente vorgesehen sind, die bevorzugt über korrespondierende Schrägflächen oder konische Flächen, insbesondere mittels Schrauben oder dergleichen, miteinander in axialer Richtung verkeilbar sind. Durch Anziehen beispielsweise dieser Schrauben wird in Verbindung mit den konischen äußeren Mantelflächen des inneren und äußeren Ringelements auf das äußere Ringelement eine Anpresskraft in Richtung der Achse oder Welle ausgeübt. Die Rotorscheiben sind an den jeweiligen äußeren Ringelementen mittels Verschraubung oder dergleichen befestigt.

Es hat sich ebenfalls als vorteilhaft erwiesen, daß zwischen dem äußeren Ringelement und dem ringförmig ausgebildeten Stator ein Nadellager oder dergleichen Lager angebracht ist.

Weitere Vorteile und Anwendungsmöglichkeiten der vorliegenden Erfindung ergeben sich aus der nachfolgenden Beschreibung von Ausführungsbeispielen anhand der Zeichnungen.

Es zeigen:
- Figur 1: eine Ansicht einer möglichen Ausführungsform einer Wirbelstrombremse nach der Erfindung in Anordnung an einer Achse eines Schienenfahrzeuges,
- Figur 2: eine Seitenansicht der Wirbelstrombremse gemäß Figur 1,
- Figur 3: eine Draufsicht auf die Wirbelstrombremse,
- Figur 4: einen Längsschnitt durch die Wirbelstrombremse gemäß Figur 1,
- Figur 5: einen Längsschnitt durch eine weitere Ausführungsform einer Wirbelstrombremse nach der Erfindung in Anordnung an einer Achse eines Schienenfahrzeugs,
- Figur 6: einen Längsschnitt durch eine Wirbelstrombremse nach der Erfindung mit integrierter Kühlung,
- Figur 7: eine Draufsicht auf eine weitere Ausführungsform einer erfindungsgemäßen Wirbelstrombremse,
- Figur 8: eine schematische Darstellung einer am Fahrgestell einer Lokomotive angeordneten Wirbelstrombremse nach der Erfindung und

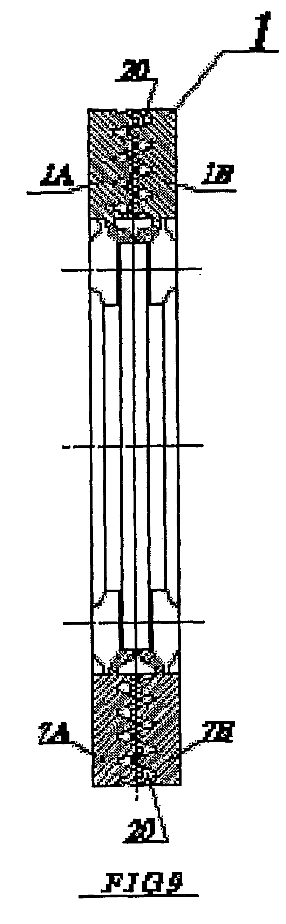

- Figur 9: eine mittlere Rotorscheibe im Schnitt mit Verzahnungsgeometrie.

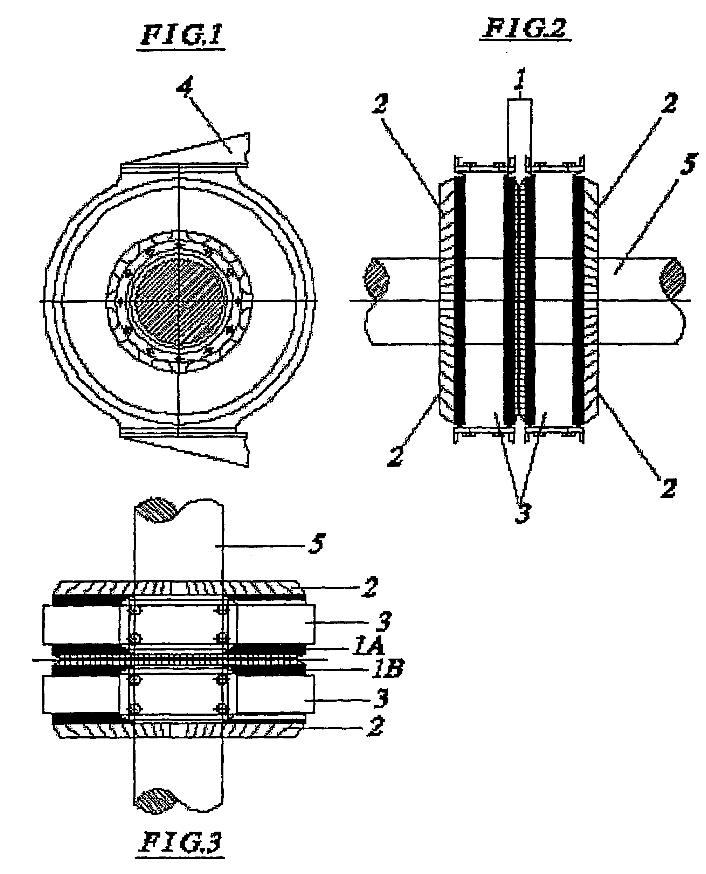

Der Retarder gemäß Figur 1 weist eine Anzahl von Magnetspulen auf, welche konzentrisch um eine Welle oder bspw. eine Achse 5 eines Schienenfahrzeuges an ringförmigen Spulenkörpern bzw. Statoren 3 montiert sind. Im geringen Abstand vor den Polen der Spulen befindet sich auf den äußeren beiden Seiten des Stators 3 jeweils eine äußere Rotorscheibe 2, welche drehfest mit der Achse 5 verbunden ist. Das statorengehäuse ist zweigeteilt, so daß zwischen den beiden Statorhälften 3a, 3b eine mittlere Rotorscheibe 1 angeordnet ist, welcher ebenfalls drehfest mit der Achse 5 verbunden ist.

Bei Stromerregung der Spulen ergeben sich an den auf jeweils gleichen Stirnseiten der Spulenpakete gelegenen Polen magnetische Felder mit alternierenden Feldrichtungen. Beim Bremsvorgang werden dann in den sich in diesen inhomogen Magnetfeldern drehenden Rotorscheiben 1, 2 Wirbelströme induziert, welche ein sich auf die Achse 5 übertragendes Bremsmoment auf die Rotorscheiben 1, 2 ausüben.

Die Befestigung der Statorhälften 3a, 3b des Stators erfolgt mittels einer Halterung 4, bspw. an dem Chassis eines Schienen- oder Kraftfahrzeuges.

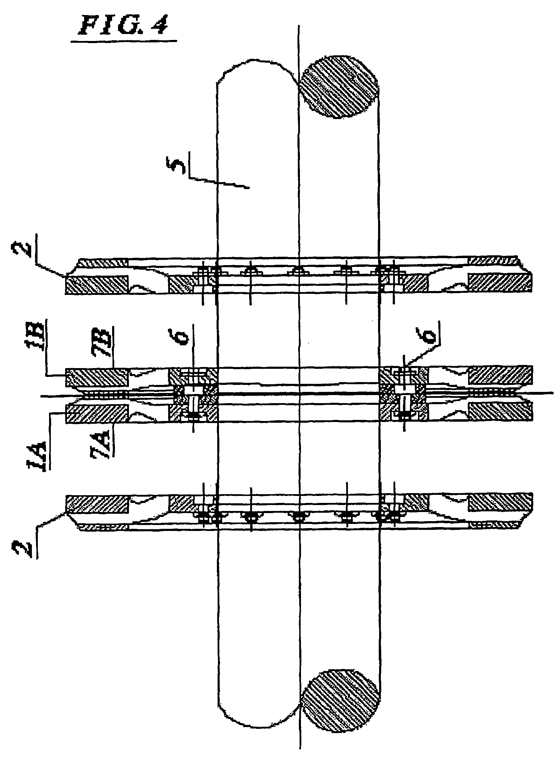

Aus Figur 4 ist zu erkennen, daß der mittlere Rotor 1 zweigeteilt ausgebildet ist mit einer Rotorhälfte 1a und einer zweiten Rotorhälfte 1b. Die beiden Rotorhälften 1a, 1b sind im radial inneren Bereich mittels Verschraubungen 6 miteinander verbunden. An ihren radial äußeren Enden, im Bereich des den Polplatten der Spulen gegenüberstehenden Ringabschnitten 7a, 7b sind die beiden Rotorhälften 1a, 1b in axialer Richtung beweglich, was bspw. durch eine besondere Verzahnungsgeometrie 20 der aneinanderliegenden Teile der Rotorhälften 1a, 1b erzielt werden kann. Selbstverständlich weisen die mittlere Rotorscheibe 1 wie auch die äußere Rotorscheibe 2 Kühlkanäle zum Ansaugen von Kühlluft auf.

Durch die axiale Beweglichkeit der Rotorhälften 1a, 1b der mittleren Rotorscheibe 1 ist erreicht, daß im Betrieb des Retarders und der sich dabei einstellenden hohen Temperaturen zwischen den Polplatten des Stators 3 und der angrenzenden Ringfläche der jeweiligen Rotorscheiben 1, 2 bzw. Rotorhälfte 1a, b gleiche geometrische Verhältnisse einstellen können, so daß insgesamt von jedem Rotor 1, 2 bzw. jeder Rotorhälfte 1a, 1b die gleiche Bremswirkung ausgeht.

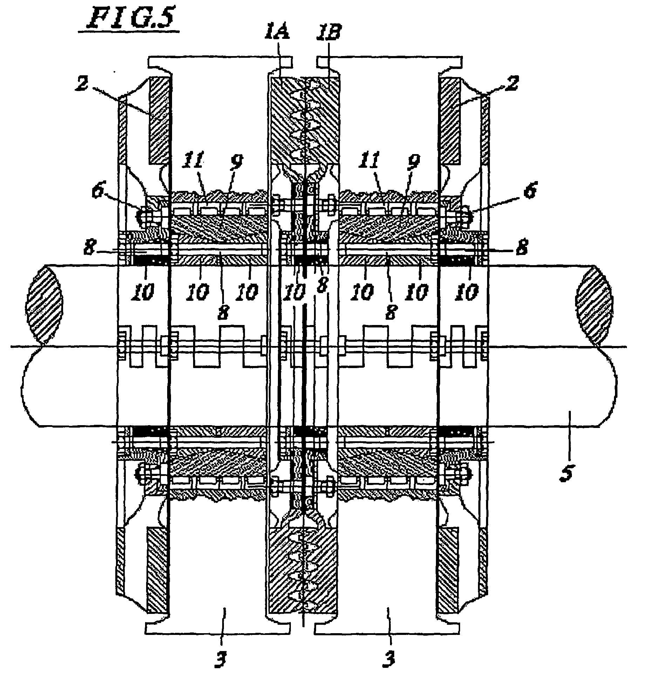

Die Variante gemäß Figur 5 unterscheidet sich von der Version gemäß Figur 1 bis 4 dadurch, daß die Rotorscheiben 1a, 1b, 2 über Spannringe auf der Achse 5 des Schienenfahrzeuges angebracht sind. Den einzelnen Rotoren 1a, 1b, 2 und den Statoren 3 sind Ringelemente zugeordnet, welche aus einem äußeren Ringelement 9 und einem inneren Ringelement 10 bestehen. Der Außenmantel des inneren Ringelementes 10 ist konisch ausgebildet. Das äußere Ringelement 9 besteht aus Halbschalen, welche mittels einer Verzahnung und eines in Axialrichtung verlaufenden Halteelements fixiert sind. Durch Anziehen einer jeweiligen Schraube 8 wird in Verbindung mit der konischen äußeren Mantelfläche des inneren Ringelementes 10 auf das äußere Ringelement 9 eine Anpreßkraft auf die Achse 5 ausgeübt. Die Befestigung der Rotoren 2 an den jeweiligen äußeren Ringelementen 9 erfolgt mittels Verschraubung 6.

Zusätzlich befindet sich zwischen dem äußeren Ringelement 9 und den Statoren 3 ein Lager, vorzugsweise ein Nadellager 11.

Die Halterung der Statoren 3 erfolgt nicht am Chassis, da sich die Achsen 5 bei Güterzügen um mehr als um etwa 42 mm in axialer Richtung verschieben können. Vielmehr sind Spannelemente vorgesehen, welche an der Radaufhängung fixiert und auch nachgespannt werden können.

Da bei Eisenbahnwagen, sowohl bei Güter- als auch in der Regel bei Personenwagen keine eigene Stromversorgung vorhanden ist, empfiehlt es sich nach der Erfindung, zusätzlich einen elektrischen Generator zur Versorgung der Spulen des Retarders und der Elektronik zur Steuerung des Retarders mit zugeordnetem Akkumulator vorzusehen.

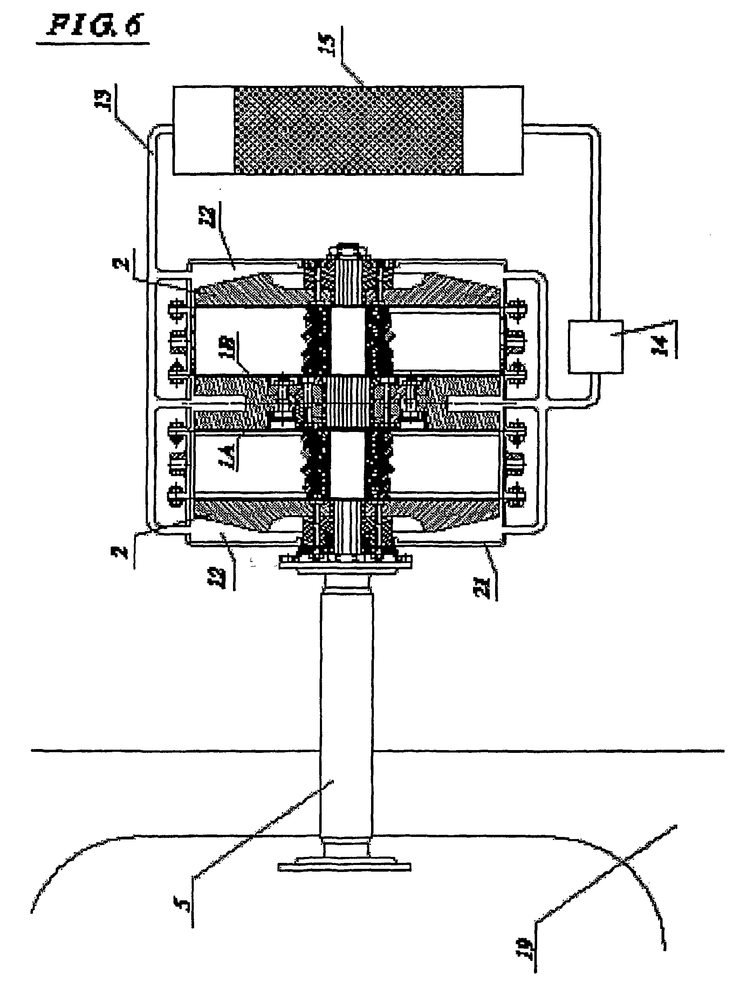

Die Variante gemäß Figur 6 unterscheidet sich von der Variante gemäß Figur 5 i. w. dadurch, daß der Retarder mittels eines Gehäuses 21 gekapselt ist und die Rotorscheiben 1a, 1b, 2 in einem Flüssigkeitsbad 12 zur Kühlung laufen. Eine Kühlflüssigkeit 13 dient dabei nicht zum Abbremsen der Rotoren, wie bei hydrodynamischen Retardern, sondern allein zur Kühlung der Rotorscheiben 1a, 1b, 2. Für die Kapselung kommt als Werkstoff Aluminium oder dergleichen in Frage, um zusätzlich eine gute Wärmeabstrahlung zu ermöglichen. Die Kühlflüssigkeit 13 wird mittels einer Elektropumpe 14 zur Zirkulation gebracht und einem Wärmetauscher 15 zugeführt. Ersichtlich müssen für die Rotation der Rotoren 1a, 1b, 2 in dem Flüssigkeitsbad 12 entsprechende Dichtungen an dem äußeren Gehäuse vorgesehen sind.

Die Aufhängung und ebenso die Energieversorgung erfolgt wieder wie bei der Variante gemäß Figur 5.

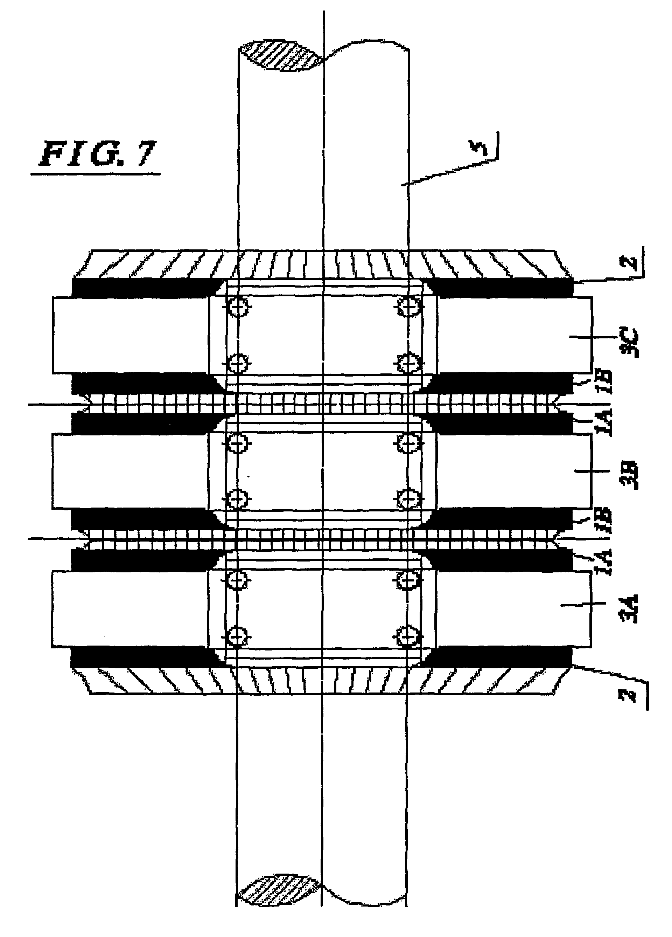

Bei dem Ausführungsbeispiel gemäß Figur 7 sind zwei derartige als Rotorpaare 1a, 1b ausgebildete mittlere Rotorscheiben 1 im Inneren des Retarders angeordnet, wodurch sich bei vergleichbaren geometrischen Abmessungen die Bremskraft des Rotors und damit seine Leistungsfähigkeit nochmals erhöhen läßt.

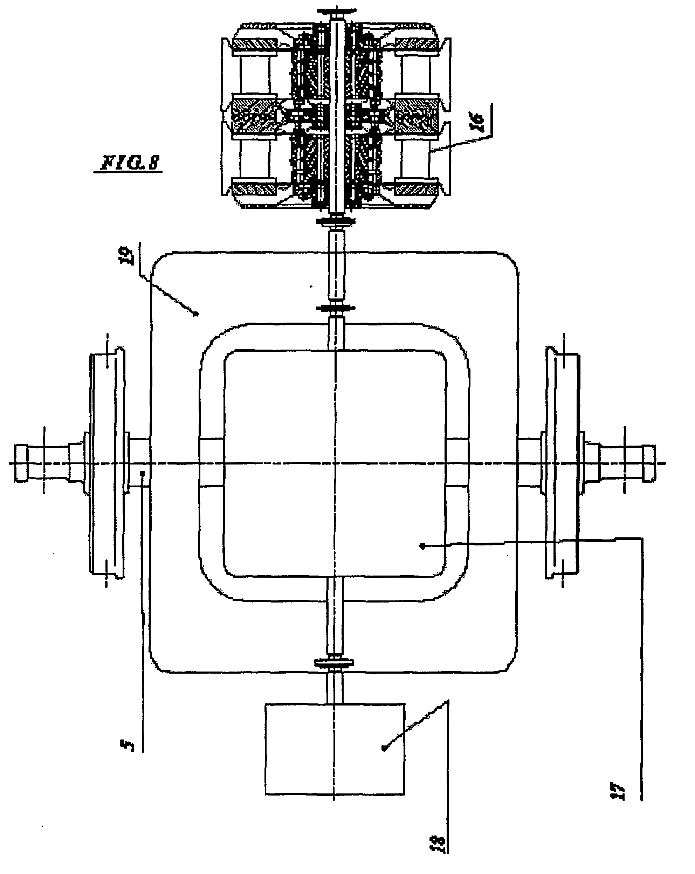

Selbstverständlich ist es aber auch möglich, den Retarder 16, wie in Figur 8 schematisch dargestellt, am Fahrgestell 19 eines Schienenfahrzeuges, insbesondere eines Personenwaggons, anzuordnen, wobei dann ein Zwischengetriebe 17 zwischen Retarder 16 und der Achse 5 vorgesehen ist. Auf der dem Retarder 16 gegenüberliegenden Seite befindet sich der bereits jetzt bei derartigen Schienenfahrzeugen vorhandene Generator 18 für die Stromversorgung.

### Bezugszeichenliste

- 1 -: mittlere Rotorscheibe
- 1a -: Rotorhälfte
- 1b -: Rotorhälfte
- 2 -: äußere Rotorscheibe
- 3 -: Stator
- 3a -: Statorhälfte
- 3b -: Statorhälfte
- 3c -: Statorabschnitt
- 4 -: Halterung
- 5 -: Achse
- 6 -: Verschraubung
- 7a -: Ringabschnitt
- 7b -: Ringabschnitt
- 8 -: Scheibe
- 9 -: Ringnut
- 10 -: Ringnut
- 11 -: Nadellager
- 12 -: Flüssigkeitsbad
- 13 -: Kühlflüssigkeit
- 14 -: Elektropumpe
- 15 -: Wärmetauscher
- 16 -: Retarder
- 17 -: Zwischengetriebe
- 18 -: Generator
- 19 -: Fahrgestell
- 20 -: Verzahnungsgeometrie
- 21 -: Gehäuse

## Patentansprüche

1. Retarder (16) als Brems- oder Zusatzbremseinrichtung für Fahrzeuge oder dergleichen, insbesondere Schienenfahrzeuge, mit einem Stator (3) bestehend aus wenigstens zwei axial beabstandeten Statorhälften (3a, 3b), die jeweils Magnetfeldspulen aufweisen, und einem Rotor, der zwischen den wenigstens zwei Statorhälften (3a, 3b) angeordnet ist, wobei der Rotor drehfest mit einer Achse (5) oder einer Welle des Fahrzeuges und der Stator mit dem Fahrzeug beziehungsweise einem Fahrgestell (19) des Fahrzeuges gekoppelt ist und wobei der Rotor durch wenigstens eine zweigeteilte Rotorscheibe (1) bestehend aus zwei benachbarten Rotorhälften (1a, 1b) gebildet ist, die in einem radial inneren der Achse (5) oder Welle zugewandten Ringbereich miteinander verbunden sind, **dadurch gekennzeichnet, dass** die Rotorhälften (1a, 1b) in einem radial äußeren Ringabschnitt (7a, 7b), der im wesentlichen den Magnetfeldspulen des Stators (3) benachbart ist, mit lichtem axialen Abstand zueinander angeordnet und für eine Relativbewegung in axialer Richtung zueinander ausgebildet sind.

2. Retarder nach Anspruch 1, **dadurch gekennzeichnet, dass** die Rotorhälften (1a, 1b) als getrennte Bauteile voneinander ausgebildet sind, die in einem radial inneren der Achse (5) oder Welle zugewandten Ringbereich, insbesondere mittels Verschraubung (6) oder dergleichen Verbindungsmittel, miteinander verbunden sind.

3. Retarder nach einem der Ansprüche 1 oder 2, **dadurch gekennzeichnet, dass** einer äußeren Seite des im wesentlichen ringförmigen Stators (3) beziehungsweise der jeweiligen äußeren Statorhälfte (3a, 3b) jeweils eine weitere äußere, bevorzugt einteilige Rotorscheibe (2) zugeordnet ist, die mit der Achse (5) oder Welle drehfest verbunden ist.

4. Retarder nach einem der vorhergehenden Ansprüche 1 oder 2, **dadurch gekennzeichnet, dass** dem Stator (3) ein weiterer Statorabschnitt (3c), der in Form und Aufbau vergleichbar zu den Statorhälften (3a, 3b), axial beabstandet zugeordnet ist, und in einem durch eine Statorhälfte (3a, 3b) und den weiteren Statorabschnitt (3c) gebildeten Spalt eine zweite, zweigeteilte sowie drehfest mit der Achse (5) oder Welle verbundene Rotorscheibe (1) angeordnet ist.

5. Retarder nach einem der vorhergehenden Ansprüche, **dadurch gekennzeichnet, dass** die beiden Rotorhälften (1a, 1b) der wenigstens einen zweigeteilten Rotorscheibe (1) im Bereich der radial äußeren, einander zugewandten Ringabschnitte (7a, 7b) eine Verzahnungsgeometrie (20), insbesondere eine korrespondierende und teilweise ineinander eingreifende Verzahnung und Gegenverzahnung aufweisen, die bevorzugt eine Kreisringstruktur besitzen.

6. Retarder nach einem der vorhergehenden Ansprüche, **dadurch gekennzeichnet, dass** der Rotor, insbesondere die Rotorscheiben (1, 2) beziehungsweise Rotorhälften (1a, 1b) des Rotors und/oder der Stator (3), insbesondere die Statorhälften (3a, 3b) beziehungsweise der Statorabschnitt (3c), durch in radialer Richtung geteilte Bauteile gebildet sind, die nach dem Einbau mittels Verbindungsmittel miteinander fest verbunden sind.

7. Retarder nach einem der vorhergehenden Ansprüche, **dadurch gekennzeichnet, dass** der Stator (3), insbesondere die Statorhälften (3a, 3b) beziehungsweise der Statorabschnitt (3c) über verstellbare Halterungen mit dem Fahrzeug oder einem Fahrgestell (19) verbunden sind.

8. Retarder nach einem der vorhergehenden Ansprüche 1 bis 4, **dadurch gekennzeichnet, dass** der Stator (3) über einoder nachstellbare Spannelemente mit einer Radaufhängung des Fahrzeuges verbunden ist.

9. Retarder nach einem der vorhergehenden Ansprüche, **gekennzeichnet durch** eine zugeordnete Stromversorgung zur Versorgung der Magnetfeldspulen und ggf. der Elektroniksteuerung des Retarders (16), die bevorzugt **durch** einen Generator (18) und ggf. nachgeschalteter Akkumulatoren gebildet ist.

10. Retarder nach einem der vorhergehenden Ansprüche, **dadurch gekennzeichnet, dass** zwischen Achse (5) beziehungsweise Welle und dem Retarder (16) ein Zwischengetriebe (17) angeordnet ist. ,

11. Retarder nach einem der vorhergehenden Ansprüche, **dadurch gekennzeichnet, dass** der Retarder in einem Gehäuse (21), bevorzugt bestehend aus Aluminium oder dergleichen, gekapselt ist, wobei die Rotorscheiben (1, 1a, 1b, 2) von einem Flüssigkeitsbad (12), insbesondere von einer Kühlflüssigkeit (13), beaufschlagt sind.

12. Retarder nach einem der vorhergehenden Ansprüche, **dadurch gekennzeichnet, dass** die Kühlflüssigkeit (13) mittels einer Pumpe, zum Beispiel einer Elektropumpe (14), in einem geschlossenen Kreislauf zwischen Gehäuse (21) und einem Wärmetauscher (15) umgewandelt wird.

13. Retarder nach einem der vorhergehenden Ansprüche, **dadurch gekennzeichnet, dass** die Rotorscheiben (1, 1a, 1b, 2) mittels Spannelementen an der Achse oder Welle befestigt sind, wobei innere und äußere Ringelemente (9, 10) vorgesehen und bevorzugt über korrespondierende Schrägflächen oder konische Flächen, insbesondere mittels Schrauben (8) oder dergleichen Mittel, miteinander in axialer Richtung verkeilbar sind.

14. Retarder nach Anspruch 13, **dadurch gekennzeichnet, dass** zwischen dem äußeren Ringelement (9) und dem ringförmig ausgebildeten Stator (3) ein Nadellager (11) angeordnet ist.

## Claims

1. Retarder (16) as braking or auxiliary braking equipment for vehicles or the like, particularly rail vehicles, with a stator (3) consisting of at least two axially spaced stator halves (3a, 3b), which each have magnetic field coils, and a rotor, which is arranged between the at least two stator halves (3a, 3b), wherein the rotor is coupled to be rotationally fast with an axle (5) or a shaft of the vehicle and the stator with the vehicle or a chassis (19) of the vehicle and wherein the rotor is formed by at least one rotor disc (1) divided in two and consisting of two adjacent rotor halves (1a, 1b), which are connected together in an annular region facing radially inwardly of the axle (5) or shaft, **characterised in that** the rotor halves (1a, 1b) are arranged with a clear axial spacing relative to one another in a radially outer annular section (7a, 7b), which is substantially adjacent to the magnetic field coils of the stator (3), and are constructed for movement in axial direction relative to one another.

2. Retarder according to claim 1, **characterised in that** the rotor halves (1a, 1b) are constructed as mutually separate components which are connected together in an annular region facing radially inwardly of the axle (5) or shaft by means of, in particular, groove connections (6) or like connecting means.

3. Retarder according to one of claims 1 and 2, **characterised in that** an outer side of the substantially annular stator (3) or of the respective outer stator half (3a, 3b) is associated with a respective further outer, preferably one-part, rotor disc (2) connected in rotationally fast manner with the axle (5) or shaft.

4. Retarder according to one of the preceding claims 1 and 2, **characterised in that** a further stator section (3c) comparable in shape and construction with the stator halves (3a, 3b) is associated at an axial spacing with the stator (3) and a second rotor disc (1) divided in two and connected in rotationally fast manner with the axle (5) or shaft is arranged in a gap formed by one stator half (3a, 3b) and the further stator section (3c).

5. Retarder according to one of the preceding claims, **characterised in that** the two rotor halves (1a, 1b) of the at least one rotor disc (1) divided in two has in the region of the radially outer, mutually facing annular sections (7a, 7b) a toothing geometry (20), particularly a corresponding and partly interengaging toothing and counter-toothing, which preferably have a circularly annular structure.

6. Retarder according to one of the preceding claims, **characterised in that** the rotor, particularly the rotor discs (1, 2) or rotor halves (1a, 1b) of the rotor, and/or the stator (3), particularly the stator halves (3a, 3b) or the stator section (3c), are formed by components which are divided in radial direction and which after installation are fixedly connected together by means of connecting means.

7. Retarder according to one of the preceding claims, **characterised in that** the stator (3), particularly the stator halves (3a, 3b) or the stator section (3c), are connected with the vehicle or a chassis (19) by way of adjustable mounts.

8. Retarder according to one of the preceding claims 1 to 4, **characterised in that** the stator (3) is connected with a wheel suspension of the vehicle by way of adjustable or re-adjustable clamping elements.

9. Retarder according to one of the preceding claims, **characterised by** an associated current supply for supply of the magnetic field coils and in a given case of the electronic control system of the retarder (16), which is preferably formed by a generator (18) and in a given case downstream batteries.

10. Retarder according to one of the preceding claims, **characterised in that** an intermediate transmission (17) is arranged between axle (5) or shaft and the retarder (16).

11. Retarder according to one of the preceding claims, **characterised in that** the retarder is enclosed in a housing (21) preferably consisting of aluminium or the like, wherein the rotor discs (1, 1a, 1b, 2) are loaded by a liquid bath (12), particularly of a cooling liquid (13).

12. Retarder according to one of the preceding claims, **characterised in that** the cooling liquid (13) is circulated in a closed circuit between housing (21) and a heat exchanger (15) by means of a pump, for example an electric pump (14).

13. Retarder according to one of the preceding claims, **characterised in that** the rotor discs (1, 1a, 1b, 2) are fastened to the axle or shaft by means of clamping elements, wherein inner and outer annular elements (9, 10) are provided and can be wedged with one another in axial direction preferably by way of corresponding inclined surfaces or conical surfaces, particularly by means of screws (8) or the like means.

14. Retarder according to claim 13, **characterised in that** a needle bearing (11) is arranged between the outer annular element (9) and the stator (3) of annular construction.

## Revendications

1. Ralentisseur (16) s'utilisant comme dispositif de freinage ou de freinage auxiliaire pour véhicules ou similaires, en particulier véhicules ferroviaires, comprenant un stator (3) composé d'au moins deux moitiés de stator (3a, 3b) séparées axialement, qui présentent respectivement des bobines à champ magnétique, et un rotor qui est disposé entre les au moins deux moitiés de stator (3a, 3b), le rotor étant couplé de façon résistante à la torsion à un axe (5) ou un arbre du véhicule et le stator étant couplé au véhicule et/ou à un châssis (19) du véhicule, et dans lequel le rotor est formé par au moins un disque (1) de rotor en deux parties composé de deux moitiés de rotor (1a, 1b) adjacentes qui sont reliées l'une à l'autre dans une zone annulaire radialement interne dirigée vers l'axe (5) ou l'arbre, **caractérisé en ce que** les moitiés de rotor (1a, 1b) sont disposées l'une par rapport à l'autre à une distance légèrement axiale dans un segment annulaire (7a, 7b) radialement externe qui est essentiellement adjacent aux bobines à champ magnétique du stator (3), et **en ce qu'**elles sont configurées entre elles en vue d'un mouvement relatif dans la direction axiale.

2. Ralentisseur selon la revendication 1, **caractérisé en ce que** les moitiés de rotor (1a, 1b) sont configurées comme des composants séparés les uns des autres, qui sont reliés entre eux dans une zone annulaire radialement interne dirigée vers l'axe (5) ou l'arbre, plus particulièrement au moyen de raccords à vis (6) ou moyens de liaison similaires.

3. Ralentisseur selon une des revendications 1 ou 2, **caractérisé en ce que** respectivement un autre disque (2) de rotor externe, de préférence en une seule pièce, est associé à une face externe du stator (3) sensiblement annulaire et/ou à la moitié de stator (3a, 3b) externe respective, le disque étant relié à l'axe (5) ou l'arbre de façon résistante à la torsion.

4. Ralentisseur selon une des revendications précédentes 1 ou 2, **caractérisé en ce qu'**un autre segment de stator (3c) qui est comparable en forme et structure aux moitiés de stator (3a, 3b), est associé au stator (3) en étant axialement séparé de celui-ci, et un second disque de rotor (1) en deux parties et relié de façon résistante à la torsion à l'axe (5) ou l'arbre est disposé dans une fente formée par une moitié de stator (3a, 3b) et l'autre segment de stator (3c).

5. Ralentisseur selon une quelconque des revendications précédentes, **caractérisé en ce que** les deux moitiés de rotor (1a, 1b) du au moins un disque de rotor (1) en deux parties comprennent, dans la zone des segments annulaires (7a, 7b) radialement externes dirigés les uns vers les autres, une géométrie de denture (20), en particulier une denture et contre-denture correspondantes et s'engageant partiellement l'une dans l'autre, possédant de préférence une structure circulaire.

6. Ralentisseur selon une quelconque des revendications précédentes, **caractérisé en ce que** le rotor, en particulier les disques de rotor (1, 2) et/ou les moitiés de rotor (1a, 1b) et/ou le stator (3), plus particulièrement les moitiés de stator (3a, 3b) et/ou le segment de stator (3c), sont formés par des composants divisés dans le sens radial qui sont reliés solidement entre eux après montage à l'aide de moyens de liaison.

7. Ralentisseur selon une quelconque des revendications précédentes, **caractérisé en ce que** le stator (3), plus particulièrement les moitiés de stator (3a, 3b), et/ou le segment de stator (3c), sont reliés par l'intermédiaire de fixations réglables au véhicule ou à un châssis (19).

8. Ralentisseur selon une des revendications 1 à 4, **caractérisé en ce que** le stator (3) est relié par l'intermédiaire d'éléments de serrage réglables ou ajustables à une suspension de roue du véhicule.

9. Ralentisseur selon une quelconque des revendications précédentes, **caractérisé par** une alimentation destinée à l'alimentation des bobines à champ magnétique et éventuellement de la commande électronique du ralentisseur (16), laquelle est formée de préférence par un générateur (18) et éventuellement des accumulateurs intercalés à la suite.

10. Ralentisseur selon une quelconque des revendications précédentes, **caractérisé en ce qu'**une transmission intermédiaire (17) est disposée entre l'axe (5) et/ou l'arbre et le ralentisseur (16).

11. Ralentisseur selon une quelconque des revendications précédentes, **caractérisé en ce que** le ralentisseur est encapsulé dans un boîtier (21) de préférence en aluminium ou similaire, les disques de rotor (1, 1a, 1b, 2) étant alimentés par un bain de liquide (12), en particulier par un liquide de refroidissement (13).

12. Ralentisseur selon une quelconque des revendications précédentes, **caractérisé en ce que** le liquide de refroidissement (13) est converti au moyen d'une pompe, par exemple une pompe électrique (14), dans un circuit fermé à courants croisés entre le boîtier (21) et un échangeur thermique (15).

13. Ralentisseur selon une quelconque des revendications précédentes, **caractérisé en ce que** les disques de rotor (1, la, 1b, 2) sont fixés à l'axe ou l'arbre au moyen d'éléments de serrage, des éléments annulaires (9, 10) internes et externes étant prévus, et étant coincés entre eux dans le sens axial, de préférence par l'intermédiaire de surfaces biseautées correspondantes ou de surfaces coniques, en particulier au moyen de vis (8) ou moyens similaires.

14. Ralentisseur selon la revendication 13, **caractérisé en ce qu'**un roulement à aiguilles (11) est disposé entre l'élément annulaire (9) externe et le stator (3) configuré de façon annulaire.
